# EUROPÄISCHE PATENTSCHRIFT

(11) **EP 2 951 402 B1**
(45) Veröffentlichungstag und Bekanntmachung des Hinweises auf die Patenterteilung: **05.12.2018**
(21) Anmeldenummer: 14722585.8
(22) Anmeldetag: 22.04.2014
(51) Int. Cl.: F01D 17/00, F02B 37/18

(54) **ABGASTURBOLADER MIT VERSCHLEISSFREIER VERBINDUNG VON KOMPONENTEN SEINES WASTEGATESYSTEMS**
EXHAUST GAS TURBOCHARGER HAVING WEARFREE LINKAGE COMPONENTS OF ITS WASTEGATESYSTEM
TURBOCOMPRESSEUR À GAZ D'ÉCHAPPEMENT PRÉSENTANT UNE CONNECTION SANS USURE DES COMPOSANTS DU SYSTEM WASTEGATE

(30) Priorität: 26.04.2013 DE 102013207677
(43) Veröffentlichungstag der Anmeldung: 09.12.2015
(73) Patentinhaber: Continental Automotive GmbH, 30165 Hannover (DE)
(72) Erfinder: MEHNE, Georg, 93173 Wenzenbach (DE); SANDOR, Ivo, 93059 Regensburg (DE); SPARRER, Christoph, 93053 Regensburg (DE)
(86) Internationale Anmeldenummer: PCT/EP2014/058157
(87) Internationale Veröffentlichungsnummer: WO 2014/173911

(56) Entgegenhaltungen:
- DE-A1-102007 018 618
- US-A- 5 146 753
- US-A- 5 205 125
- US-A1- 2003 196 435

## Beschreibung

Die Erfindung betrifft einen Abgasturbolader.

Aus der DE 10 2010 004 559 A1 ist ein Abgasturbolader bekannt, welcher eine Stelleinrichtung aufweist, die zum Betätigen eines Wastegateventils dient. Dieses Betätigen erfolgt unter Verwendung eines Antriebsglieds, welches von einer Antriebseinrichtung linear verstellt wird und auf ein drehend antreibbares Betätigungsglied des Wastegateventils einwirkt. Die Antriebseinrichtung ist mit einer Verbindungseinrichtung ausgestattet, mit deren Hilfe das Antriebsglied mit dem Betätigungsglied gelenkig verbunden ist. Gemäß einer Ausführungsform kann die Verbindungseinrichtung durch ein federelastisches, bandförmiges Element gebildet sein, dessen eines Ende mit dem Antriebsglied und dessen anderes Ende mit dem Betätigungsglied verbunden ist.

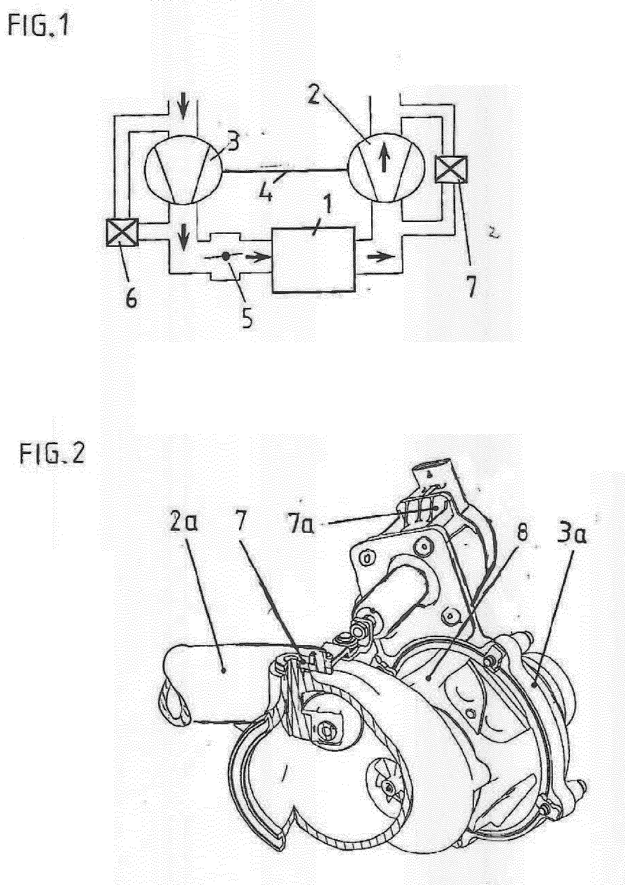

Ein Verbrennungsmotor, der von einem Abgasturbolader aufgeladen wird, zeichnet sich durch die in der Figur 1 dargestellte Anordnung der Führung von Frischluft und Abgasen aus. Im aufgeladenen Betrieb strömt das Abgas aus dem Verbrennungsmotor 1 über die Turbine 2, welche den Verdichter 3 im Ansaugtrakt vor dem Einlass des Verbrennungsmotors über eine gemeinsame Welle 4 antreibt. Durch die Verdichtung der Ansaugluft kann mehr Kraftstoff pro Zylinderhub zugemischt werden. Dadurch wird das Drehmoment des Verbrennungsmotors erhöht. Des Weiteren ist im aufgeladenen Betrieb die zwischen dem Verdichter und dem Verbrennungsmotor angeordnete Drosselklappe 5 vollständig geöffnet. Des Weiteren weist die in der Figur 1 gezeigte Anordnung ein Schubumluftventil 6 auf, welches in seinem geöffneten Zustand den motorseitigen Ausgang des Verdichters 3 mit dem Eingang des Verdichters verbindet.

Eine Regelung der Aufladung kann durch Abblasen eines Teils des Abgasmassenstroms des Verbrennungsmotors durch ein Wastegatesystem 7 erfolgen.

Die Figur 2 zeigt eine Schnittdarstellung zur Erläuterung des Wastegatesystems eines bekannten Abgasturboladers. In dieser Schnittdarstellung ist das Turbinengehäuse 2a dargestellt, in welchem das Wastegatesystem 7 angeordnet ist. Zu diesem Wastegatesystem 7 gehört ein elektrischer Wastegateaktuator 7a, der mittels eines Halters am Verdichtergehäuse 3a befestigt ist. Zwischen dem Turbinengehäuse 2a und dem Verdichtergehäuse 3a ist eine Rumpfgruppe 8 positioniert, in welcher die Welle des Abgasturboladers untergebracht ist.

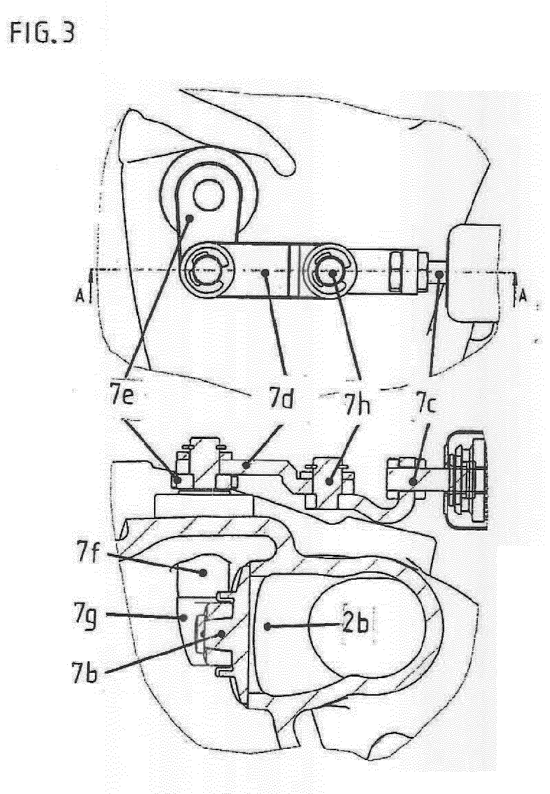

Die Figur 3 zeigt eine Schnittdarstellung einer Draufsicht auf das Wastegatesystem 6 und eine Schnittdarstellung einer Seitenansicht des Wastegatesystems 6 eines bekannten Abgasturboladers.

In der Figur 3 ist die Bypass-Öffnung 2b des Turbinengehäuses dargestellt, die unter Verwendung einer Wastegateklappe 7b geöffnet und geschlossen werden kann. Dadurch kann bei Bedarf ein Teil des Abgasmassenstroms am Turbinenrad vorbeigeleitet werden. Die Öffnungs- bzw. Schließbetätigung der Wastegateklappe 7b erfolgt über eine Linearbewegung einer Regelstange 7c, die vom Wastegateaktuator initiiert wird. Diese Linearbewegung wird über ein Verbindungselement 7d an einen Wastegatehebel 7e übertragen. Eine in einer Buchse 7f gelagerte Wastegatespindel 7g überträgt die Drehbewegung des Wastegatehebels 7e auf die Wastegateklappe 7b. Aufgrund der linear geführten Regelstange 7c ist ein Ausgleichsgelenk 7h vorgesehen, um einen Schränkungsausgleich zu gewährleisten.

Aufgrund der hohen Temperaturen im Bereich der Lagerstellen sind die bewegten Teile des Wastegatesystems als Gleitlagerungen ausgeführt. Die im Bereich dieser Lagerstellen auftretenden Lagerspiele sind aufgrund von thermischen Dehnungen sowie Fertigungs- und Montagetoleranzen entsprechend groß zu dimensionieren, um ein Verklemmen des Wastegatesystems zu vermeiden. Dies führt allerdings zu einer unerwünscht großen Beweglichkeit aller Komponenten der Wastegate-Kinematik, sobald bei geöffneter Wastegateklappe die Zugkraft des Wastegateaktuators entfällt. Dabei kommt es zu einer andauernden Richtungsumkehr der im Wastegatesystem herrschenden Kräfte, welche durch die Abgaspulsationen des Verbrennungsmotors auf die Wastegateklappe hervorgerufen werden. Dies führt zu unerwünschten Relativbewegungen der innerhalb der Spielkette angeordneten Komponenten des Wastegatesystems im Rhythmus der Motorzündfrequenz.

Untersuchungen des zeitlichen Verlaufes einer Kraftmessung im Wastegatesystem während eines Teillastbetriebes bei geöffneter Wastegateklappe haben bestätigt, dass die Wastegate-Kinematik nicht nur ausschließlich auf Zug (positive Kräfte) belastet wird, sondern dass auch Druckkräfte (negative Kräfte) und somit Lastwechsel auftreten. Diese Kräfte werden durch eine Vielzahl von Parametern beeinflusst, zu denen der Durchmesser der Bypass-Öffnung, der Motorbetriebspunkt, die Hebelverhältnisse der Wastegatekinematik, der Öffnungswinkel der Wastegateklappe, die Anzahl der Lagerstellen und die Größe des Spiels an den Lagerstellen gehören.

Aufgrund dieser Lastwechsel kommt es zu einem unerwünschten Verschleiß von Komponenten des Wastegatesystems, welcher zu einem verzögerten Ansprechverhalten des Verbrennungsmotors bis hin zu einem völligen Ausfall des Abgasturboladers führen kann. Tritt erhöhter Verschleiß im Bereich der Wastegatespindel auf, dann können verursacht durch den vergrößerten Ringspalt vermehrt Rohemissionen ins Freie gelangen. Dies wiederum hat negative Auswirkungen auf eine Ladedruckregelung, da mit zunehmendem Verschleiß keine definierte Stellung der Wastegateklappe eingestellt werden kann. Aufgrund der dadurch verursachten häufigeren Regeleingriffe über den Wastegateaktuator wird diese Problematik weiter erhöht.

Ein weiterer Schadensmechanismus resultiert aus dem ständigen Kontakt zwischen der Wastegateklappe und deren Klappensitz, wenn der Abgasturbolader über einen längeren Zeitraum bei leicht geöffneter Wastegateklappe betrieben wird. In diesem Betriebszustand kommt es aufgrund des erhöhten Spiels zwischen den Komponenten des Wastegatesystems zu ständig wiederkehrenden Kontakten zwischen der Wastegateklappe und deren Klappensitz, welche sich durch ein unerwünschtes Klappern in der Wastegatekinematik bemerkbar machen. Des Weiteren führt dies zu einer unerwünschten Verformung der Dichtflächen an der Wastegateklappe und an deren Sitz. Dies hat eine erhöhte Leckage zur Folge.

Die Aufgabe der Erfindung besteht darin, einen Abgasturbolader anzugeben, bei welchem die vorstehend angegebenen Nachteile nicht auftreten.

Diese Aufgabe wird durch einen Abgasturbolader mit den im Anspruch 1 angegebenen Merkmalen gelöst. Dieser Abgasturbolader weist ein Wastegatesystem auf, zu welchem eine Wastegateklappe, eine Regelstange und ein mit der Regelstange über ein Verbindungselement verbundener Wastegatehebel gehören, wobei das Verbindungselement ein Federelement ist, und wobei durch einen verspannten Einbau des Federelementes Zwangskräfte in das Wastegatesystem eingebracht sind, derart, dass bei geöffneter Wastegateklappe ein Vorliegen von Spiel zwischen einer Wastegatespindel und einer Buchse des Wastegatesystems ausgeschlossen ist.

Vorteilhafte Ausgestaltungen und Weiterbildungen der Erfindung sind in den abhängigen Ansprüchen angegeben.

Die Vorteile der Erfindung bestehen insbesondere darin, dass durch die Verwendung eines Federelementes als gelenkfreie und elastische Verbindung zwischen dem Wastegatehebel und der Regelstange ein Verschleiß unterdrückt wird. Des Weiteren wird durch die Spannung der elastisch verformten Verbindung ein Rütteln und Klappern der Wastegateklappenteile, welche durch die Pulsbeaufschlagung am Motor hervorgerufen werden, unterdrückt. Auch bei geöffneter Wastegateklappe ist ein Vorliegen von Spiel zwischen der Wastegatespindel und der Buchse ausgeschlossen.

Weitere vorteilhafte Eigenschaften der Erfindung ergeben sich aus deren nachfolgender beispielhafter Erläuterung anhand der Figuren 4 - 7. Es zeigt
- Figur 4: ein erstes Ausführungsbeispiel für eine Kopplung der Regelstange des Wastegatesystems mit dem Wastegatehebel unter Verwendung eines Federelementes,
- Figur 5: mehrere Ausführungsbeispiele für die Ausgestaltung der Verbindungsstelle des Wastegatehebels mit dem ersten Endbereich des Federelementes,
- Figur 6: mehrere Ausführungsbeispiele für den Mittelbereich des Federelementes und
- Figur 7: mehrere Ausführungsbeispiele für die Ausgestaltung der Verbindungsstelle zwischen dem zweiten Endbereich des Federelementes und der Regelstange.

Durch die vorliegende Erfindung wird ein Abgasturbolader bereitgestellt, welcher ein Wastegatesystem aufweist, zu welchem eine Regelstange und ein mit der Regelstange über ein Verbindungselement verbundener Wastegatehebel gehören, wobei das Verbindungselement als Federelement ausgebildet ist.

Dieses Federelement weist erfindungsgemäß einen ersten Endbereich, einen Mittelbereich und einen zweiten Endbereich auf, wobei der erste Endbereich mit dem Wastegatehebel und der zweite Endbereich durch eine Kontaktplatte mit der Regelstange kontaktiert ist.

In vorteilhafter Weise sind bei diesem Federelement der erste Endbereich und/oder der Mittelbereich und/oder der zweite Endbereich federnd ausgebildet.

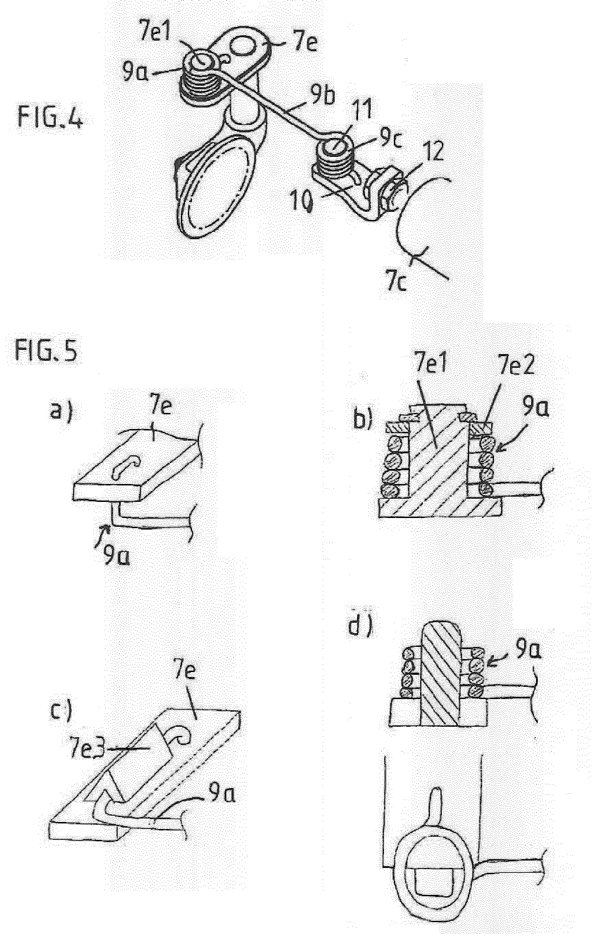

Die Figur 4 zeigt ein erstes Ausführungsbeispiel einer Kopplung der Regelstange 7c des Wastegatesystems eines Abgasturboladers mit dem Wastegatehebel 7e unter Verwendung eines Federelementes 9, welches einen ersten Endbereich 9a, einen Mittelbereich 9b und einen zweiten Endbereich 9c aufweist. Bei diesem ersten Ausführungsbeispiel ist der erste Endbereich 9a des Federelementes 9 als Torsionsfeder ausgebildet, die um einen Pin 7e1 des Wastegatehebels 7e gelegt ist, wobei sich dieser Pin 7e1 ausgehend vom Wastegatehebel 7e senkrecht nach oben erstreckt. Aufgrund dieser Ausgestaltung der Verbindungsstelle des ersten Endbereiches 9a des Federelementes 9 mit dem Wastegatehebel 7e ist der erforderliche rotatorische Freiheitsgrad sichergestellt. Durch die Anzahl der Windungen der Torsionsfeder, den Durchmesser der Torsionsfeder und die Dicke des Drahtes der Torsionsfeder kann die Rückstellkraft des Federelementes in Abhängigkeit von der lokalen Auslenkung in gewünschter Weise eingestellt werden. Der Mittelbereich 9b des Federelementes ist bei dem in der Figur 4 gezeigten Ausführungsbeispiel als Federdraht mit einer runden Querschnittsfläche realisiert. Der zweite Endbereich 9c des Federelementes 9 ist ebenso wie der erste Endbereich 9a als Torsionsfeder ausgebildet. Diese Torsionsfeder ist um einen Pin 11 gelegt, der sich ausgehend von einer Kontaktplatte 10 senkrecht nach oben erstreckt. Diese Kontaktplatte 10 ist in ihrem vom Wastegatehebel abgewandten Endbereich nach oben gebogen und ist in diesem nach oben gebogenen Bereich beispielsweise durch eine Schraubverbindung 12 fest mit der Regelstange 7c verbunden.

Die Figur 5 zeigt mehrere Ausführungsbeispiele für die Ausgestaltung der Verbindungsstelle des Wastegatehebels mit dem ersten Endbereich des Federelementes. Bei dem in der Figur 5a gezeigten Ausführungsbeispiel ist der erste Endbereich 9a des Federelementes als ein gebogenes Drahtstück ausgeführt, welches durch eine Bohrung des Wastegatehebels 7e geführt ist und dessen Ende mit dem Wastegatehebel 7e fest verbunden ist. Bei dem in der Figur 5b gezeigten Ausführungsbeispiel ist der erste Endbereich 9a des Federelementes als Spiralfeder ausgebildet, welche um einen Pin 7e1 des Wastegatehebels gelegt ist und dort mittels eines Sicherungsringes 7e2 in Axialrichtung des Pins vor einem Herausrutschen gesichert ist. Bei dem in der Figur 5c gezeigten Ausführungsbeispiel ist der erste Endbereich 9a des Federelements als ein gebogenes Drahtstück ausgeführt, welches durch ein ausgestanztes Drahtführungselement 7e3 geführt ist, welches auf der Oberseite des Wastegatehebels 7e positioniert ist, wobei das Ende des Drahtes mit dem Wastegatehebel 7e fest verbunden ist. Bei dem in der Figur 5d gezeigten Ausführungsbeispiel ist der erste Endbereich 9a des Federelementes als Spiralfeder ausgebildet, welche auf einem Hebel mit aufgebogenem Ende angeordnet ist.

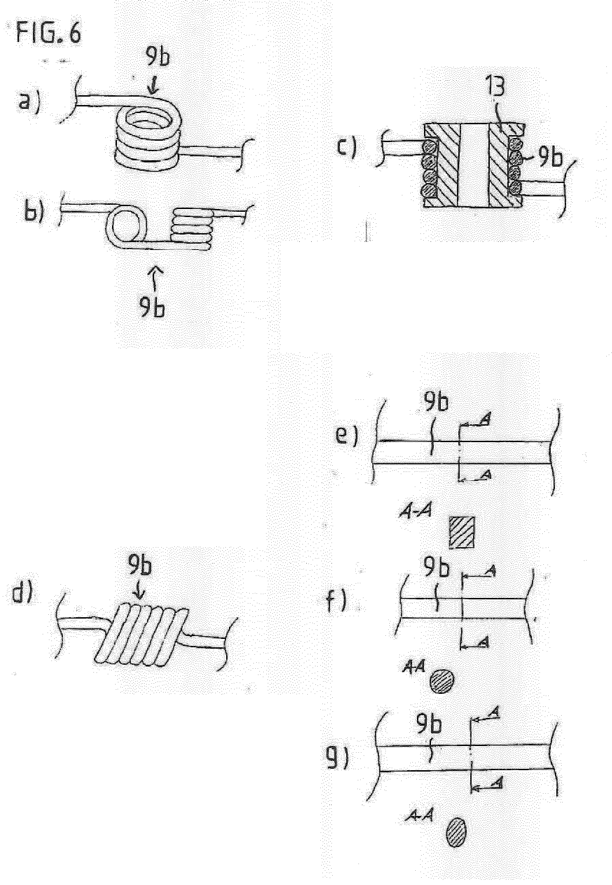

Die Figur 6 zeigt mehrere Ausführungsbeispiele für den Mittelbereich 9b des Federelementes 9. Bei dem in der Figur 6a gezeigten Ausführungsbeispiel ist der Mittelbereich 9b des Federelementes als Einfachspiralfeder realisiert, die über geradlinige Drahtstücke mit den Endbereichen des Federelementes verbunden ist. Bei dem in der Figur 6b gezeigten Ausführungsbeispiel ist der Mittelbereich 9b des Federelementes als Mehrfachspiralfeder realisiert, welche zwei mit ihrer Längsrichtung im rechten Winkel zueinander angeordnete Einfachspiralfedern aufweist. Bei dem in der Figur 6c gezeigten Ausführungsbeispiel ist der Mittelbereich 9b des Federelementes als eine um eine Versteifungshülse 13 gelegte Einfachspiralfeder ausgebildet. Bei dem in der Figur 6d gezeigten Ausführungsbeispiel ist der Mittelbereich 9b des Federelementes als Zugfeder realisiert. Bei dem in der Figur 6e gezeigte Ausführungsbeispiel ist der Mittelbereich 9b des Federelementes als Federdraht mit rechteckiger Querschnittsfläche ausgebildet. Bei dem in der Figur 6f gezeigte Ausführungsbeispiel ist der Mittelbereich 9b des Federelementes als Federdraht mit runder Querschnittsfläche realisiert. Bei dem in der Figur 6g gezeigte Ausführungsbeispiel ist der Mittelbereich 9b des Federelementes als Federdraht mit ovaler Querschnittsfläche ausgebildet.

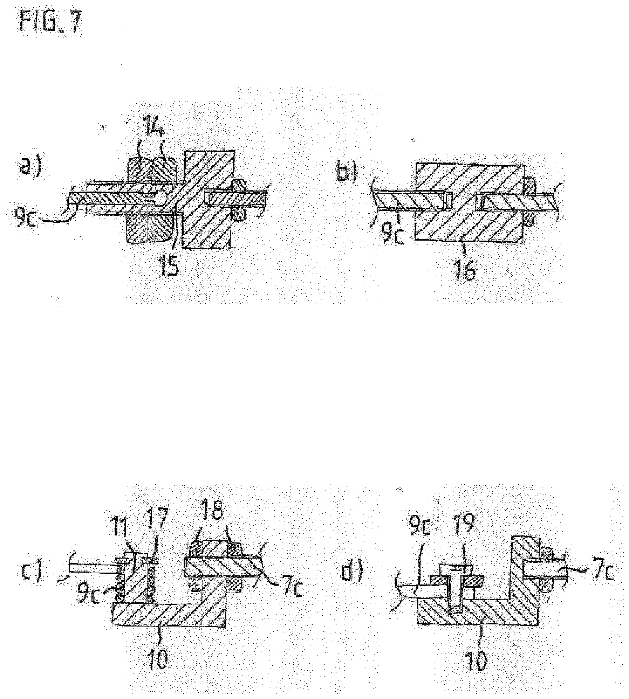

Die Figur 7 zeigt mehrere Ausführungsbeispiele für die Verbindungsstelle des zweiten Endbereiches 9c des Federelementes mit der Regelstange 7c. Bei dem in der Figur 7a gezeigten Ausführungsbeispiel ist der zweite Endbereich 9c des Federelementes als Drahtstück realisiert, welches unter Verwendung von Kontermuttern 14 in einer Spannzange 15 befestigt ist. Bei dem in der Figur 7b gezeigten Ausführungsbeispiel ist der zweite Endbereich 9c des Federelementes als Drahtstück realisiert, welches in einer Gewindehülse 16 befestigt ist. Bei dem in der Figur 7c gezeigten Ausführungsbeispiel ist der zweite Endbereich 9c des Federelementes als um einen Pin 11 einer Kontaktplatte 10 gelegte, oben mittels eines Sicherungsringes 17 gesicherte Spiralfeder realisiert, wobei das in Richtung der Regelstange 7c gelegene Ende der Kontaktplatte 10 nach oben umgebogen ist und wobei an dem nach oben umgebogenen Ende der Kontaktplatte 10 die Regelstange 7c unter Verwendung von Schrauben 18 befestigt ist. Bei dem in der Figur 7d gezeigten Ausführungsbeispiel ist der zweite Endbereich 9c des Federelementes als Drahtstück realisiert, welches unter Verwendung einer Klemmschraube 19 an einer Kontaktplatte 10 befestigt ist, wobei das in Richtung der Regelstange 7c gelegene Ende der Kontaktplatte 10 nach oben umgebogen ist und wobei an dem nach oben umgebogenen Ende der Kontaktplatte 10 die Regelstange 7c befestigt ist. Beispielsweise weist das nach oben umgebogene Ende der Kontaktplatte 10 eine Bohrung auf, in welche die Regelstange 7c eingeschraubt ist.

Die vorstehend anhand der Figuren 4, 5, 6 und 7 gezeigten Ausführungsbeispiele für die Ausgestaltung des ersten Endbereiches 9a, des Mittelbereiches 9b und des zweiten Endbereiches 9c des Federelementes 9 sind weitgehend beliebig miteinander kombinierbar.

Die Erfindung stellt nach alledem einen Abgasturbolader bereit, zu welchem eine Regelstange und ein mit der Regelstange über ein Verbindungselement verbundener Wastegatehebel gehören, wobei das Verbindungselement ein Federelement ist. Dieses Federelement bildet zwischen dem Wastegatehebel und der Regelstange eine gelenkfreie und elastische Verbindung, durch welche ein Verschleiß der Bauteile des Wastegatesystems verhindert wird. Des Weiteren wird durch die Spannung der elastisch verformbaren Verbindung ein durch die oben beschriebene Pulsbeaufschlagung hervorgerufenes Rütteln und Klappern der Wastegateklappe vermieden. Die beschriebene erfindungsgemäße Verbindung zwischen dem Wastegatehebel und der Regelstange hat auch den Vorteil, dass auf spiel- und verschleißbehaftete Gelenke, die bei bekannten Abgasturboladern zur Bereitstellung aller erforderlicher Freiheitgrade benötigt werden, verzichtet werden kann.

Die Verwendung eines Federelementes als Verbindungselement zwischen dem Wastegatehebel und der Regelstange gewährleistet die erforderliche Elastizität, die zur Bereitstellung aller erforderlichen Freiheitsgrade im gesamten Stellbereich der Wastegateklappe benötigt wird. Andererseits wird durch die Verwendung des Federelementes als Verbindungselement zwischen dem Wastegatehebel und der Regelstange eine derartige Steifigkeit gewährleistet, dass in Richtung des Stellhubes eine exakte Übertragung der auftretenden Stellkräfte erfolgen kann, ohne dass ein Ausknicken oder unerwünschte Dehnungen auftreten. Eine Schränkung beim Öffnen der Wastegateklappe sowie aufgrund von Toleranzen und thermischen Dehnungen der zwischen der Regelstange und dem Wastegatehebel angeordneten Bauteile auftretende Fehlstellungen können durch eine elastische Verformung des Federelementes in sämtlichen Raumrichtungen ausgeglichen werden. Die Verbindung kann daher spielfrei ausgeführt werden.

Erfindungsgemäß werden durch einen verspannten Einbau des Federelementes gezielt Zwangskräfte in das Wastegatesystem eingebracht, aufgrund welcher auch bei geöffneter Wastegateklappe ein Vorliegen von Spiel zwischen der Wastegatespindel und der Buchse ausgeschlossen ist. Auch dies wirkt sich positiv im Hinblick auf eine Verhinderung des Auftretens von Verschleiß auf.

## Patentansprüche

1. Abgasturbolader, welcher ein Wastegatesystem aufweist, zu welchem eine Wastegateklappe, eine Regelstange und ein mit der Regelstange über ein Verbindungselement verbundener Wastegatehebel gehören, wobei das Verbindungselement ein Federelement ist, wobei durch einen verspannten Einbau des Federelementes (9) Zwangskräfte in das Wastegatesystem eingebracht sind, derart, dass bei geöffneter Wastegateklappe (7b) ein Vorliegen von Spiel zwischen einer Wastegatespindel (7g) des Wastegatesystems und einer Buchse (7f) des Wastegatesystems ausgeschlossen ist, **dadurch gekennzeichnet, dass** das Federelement (9) einen ersten Endbereich (9a), einen Mittelbereich (9b) und einen zweiten Endbereich (9c) aufweist, wobei der erste Endbereich (9a) mit dem Wastegatehebel (7e) und der zweite Endbereich (9c) durch eine Kontaktplatte (10) mit der Regelstange (7c) kontaktiert ist.

2. Abgasturbolader nach Anspruch 1, **dadurch gekennzeichnet, dass** der erste Endbereich (9a) und/oder der Mittelbereich (9b) und/oder der zweite Endbereich (9c) federnd ausgebildet ist.

3. Abgasturbolader nach Anspruch 1 oder 2, **dadurch gekennzeichnet, dass** der erste Endbereich (9a) eine Torsionsfeder, einen gebogenen Draht oder eine Spiralfeder aufweist.

4. Abgasturbolader nach einem der Ansprüche 1 bis 3, **dadurch gekennzeichnet, dass** der Mittelbereich (9b) eine Einfachspiralfeder, eine Mehrfachspiralfeder, eine um eine Versteifungshülse gelegte Spiralfeder, eine Zugfeder, einen Federdraht mit viereckiger Querschnittsfläche, einen Federdraht mit runder Querschnittsfläche oder einen Federdraht mit ovaler Querschnittsfläche aufweist.

5. Abgasturbolader nach einem der Ansprüche 1 bis 4, **dadurch gekennzeichnet, dass** der zweite Endbereich (9c) eine Torsionsfeder, ein in eine Spannzange eingesetztes Drahtstück, ein in eine Gewindehülse eingesetztes Drahtstück, eine Spiralfeder oder ein mit einer Klemmschraube fixiertes Drahtstück aufweist.

## Claims

1. Exhaust gas turbocharger which has a wastegate system, to which a wastegate flap, a control rod and a wastegate lever which is connected to the control rod via a connecting element belong, wherein the connecting element is a spring element, coercive forces being introduced into the wastegate system by way of a braced installation of the spring element (9), in such a way that, in the case of an open wastegate flap (7b), the presence of play between a wastegate spindle (7g) of the wastegate system and a bush (7f) of the wastegate system is precluded, **characterized in that** the spring element (9) has a first end region (9a), a middle region (9b) and a second end region (9c), the first end region (9a) making contact with the wastegate lever (7e) and the second end region (9c) making contact by a contact plate (10) with the control rod (7c).

2. Exhaust gas turbocharger according to Claim 1, **characterized in that** the first end region (9a) and/or the middle region (9b) and/or the second end region (9c) are/is of resilient configuration.

3. Exhaust gas turbocharger according to Claim 1 or 2, **characterized in that** the first end region (9a) has a torsion spring, a curved wire or a spiral spring.

4. Exhaust gas turbocharger according to one of Claims 1 to 3, **characterized in that** the middle region (9b) has a single spiral spring, a multiple spiral spring, a spiral spring which is laid around a reinforcing sleeve, a tension spring, a spring wire with a rectangular cross-sectional area, a spring wire with a round cross-sectional area or a spring wire with an oval cross-sectional area.

5. Exhaust gas turbocharger according to one of Claims 1 to 4, **characterized in that** the second end region (9c) has a torsion spring, a wire piece which is inserted into a collet, a wire piece which is inserted into a threaded sleeve, a spiral spring or a wire piece which is fixed by way of a clamping screw.

## Revendications

1. Turbocompresseur à gaz d'échappement, présentant un système de décharge auquel appartiennent une soupape de décharge, une tige de réglage et un levier de décharge connecté à la tige de réglage par le biais d'un élément de connexion, l'élément de connexion étant un élément de ressort, des forces de contrainte étant introduites dans le système de décharge par une installation précontrainte de l'élément de ressort (9), de telle sorte que lorsque la soupape de décharge (7b) est ouverte, il ne puisse pas y avoir de jeu entre une broche de décharge (7g) du système de décharge et un manchon (7f) du système de décharge, **caractérisé en ce que** l'élément de ressort (9) présente une première région d'extrémité (9a), une région centrale (9b) et une deuxième région d'extrémité (9c), la première région d'extrémité (9a) étant mise en contact avec le levier de décharge (7e) et la deuxième région d'extrémité (9c) étant mise en contact avec la tige de réglage (7c) par le biais d'une plaque de contact (10).

2. Turbocompresseur à gaz d'échappement selon la revendication 1,
**caractérisé en ce que**
la première région d'extrémité (9a) et/ou la région centrale (9b) et/ou la deuxième région d'extrémité (9c) sont réalisées de manière élastique.

3. Turbocompresseur à gaz d'échappement selon la revendication 1 ou 2,
**caractérisé en ce que**
la première région d'extrémité (9a) présente un ressort de torsion, un câble cintré ou un ressort spiral.

4. Turbocompresseur à gaz d'échappement selon l'une quelconque des revendications 1 à 3, **caractérisé en ce que** la région centrale (9b) présente un ressort spiral simple, un ressort spiral multiple, un ressort spiral enroulé autour d'une douille de rigidification, un ressort de traction, un câble à ressort de section transversale rectangulaire, un câble à ressort de section transversale circulaire, ou un câble à ressort de section transversale ovale.

5. Turbocompresseur à gaz d'échappement selon l'une quelconque des revendications 1 à 4, **caractérisé en ce que** la deuxième région d'extrémité (9c) présente un ressort de torsion, une longueur de câble insérée dans une pince de serrage, une longueur de câble insérée dans une douille filetée, un ressort spiral ou une longueur de câble fixée avec une vis de serrage.
